# EUROPEAN PATENT APPLICATION

(11) **EP 4 253 467 A1**
(43) Date of publication of application: **04.10.2023**
(21) Application number: 21897871.6
(22) Date of filing: 19.11.2021
(51) Int. Cl.: C08K 5/14, C08K 5/3415, C08K 5/372, C08L 11/00, C08K 3/04

(54) **CHLOROPRENE-BASED RUBBER COMPOSITION, VULCANIZED OBJECT OBTAINED FROM SAID CHLOROPRENE-BASED RUBBER COMPOSITION, AND VULCANIZED MOLDED OBJECT OBTAINED FROM CHLOROPRENE-BASED RUBBER COMPOSITION**

(30) Priority: 27.11.2020 JP 2020197418
(71) Applicant: Denka Company Limited, Tokyo 103-8338 (JP)
(72) Inventor: SAKAI, Yuki, Tokyo 103-8338 (JP); KONDO, Atsunori, Tokyo 103-8338 (JP)
(74) Representative: Gulde & Partner
(86) International application number: PCT/JP2021/042562
(87) International publication number: WO 2022/113897

(57) **Abstract**

A chloroprene-based rubber composition capable of obtaining a vulcanizate having excellent compression set resistance and excellent heat resistance, a vulcanizate of the chloroprene-based rubber composition, and a vulcanized molded body of the chloroprene-based rubber composition having excellent compression set resistance and heat resistance are provided.

A chloroprene-based rubber composition comprising 100 parts by mass of a chloroprene-based rubber, 0.1 to 10 parts by mass of an organic peroxide, and 0.1 to 40 parts by mass of a compound having one or more thioether structures is provided.

## Description

### TECHNICAL FIELD

The present invention relates to a rubber composition containing a chloroprene-based rubber as a main component, a vulcanizate of the chloroprene-based rubber composition, and a vulcanized molded body of the chloroprene-based rubber composition.

### BACKGROUND ART

A chloroprene-based rubbers is excellent in mechanical properties, and chemical resistance, and is used in a wide range of fields such as automobile parts, adhesives, and various industrial rubber parts, taking advantage of these properties. In addition, in recent years, the performance required for rubber parts has increased significantly, and improving compression set resistance and heat resistance are required.

As a technique for reducing the compression set, Patent Literature 1 discloses a semi-conductive rubber composition comprising a rubber component including at least a copolymer rubber containing ethylene oxide as a copolymer component and a chloroprene rubber, wherein the semi-conductive rubber composition contains 0.5 parts by mass or more and 1.5 parts by mass or less of a thiourea-based vulcanization accelerator, 0.5 parts by mass or more and 1.5 parts by mass or less of a guanidine-based vulcanization accelerator, and 0.5 parts by mass or more and 2.0 and a peroxide-based cross-linking agent with respect to 100 parts by mass of the total amount of the rubber component.

Further, as a rubber composition further improved in heat resistance and ozone resistance when vulcanized and molded, Patent Literature 2 discloses a rubber composition comprising a blend rubber composed of 30 to 95% by mass of a chloroprene rubber and 5 to 70% by mass of a chlorinated polyethylene, wherein the rubber composition comprising 100 parts by mass of the blend rubber, 0.1 to 20 parts by mass of a vulcanization accelerator, and 0.2 to 5 parts by mass of a cross-linking aid.

### CITATION LIST

### PATENT LITERATURE

Patent Literature 1 JP-A-2010-180357

### SUMMARY OF INVENTION

### TECHNICAL PROBLEM

However, in the prior art, it has not been possible to obtain a rubber composition capable of achieving both compression set resistance and heat resistance in a vulcanized molded body. The present invention provides a chloroprene-based rubber composition capable of obtaining a vulcanizate having excellent compression set resistance and excellent heat resistance, a vulcanizate of the chloroprene-based rubber composition, and a vulcanized molded body of the chloroprene-based rubber composition having excellent compression set resistance and heat resistance.

### SOLUTION TO PROBLEM

The present inventors have made intensive studies to solve such problems and found that by adding a specific amount of an organic peroxide and a compound having a thioether structure to a chloroprene-based rubber, a chloroprene-based rubber composition capable of obtaining a vulcanizate having excellent compression set resistance and excellent heat resistance can be obtained, completing the present invention.

According to the present invention, a chloroprene-based rubber composition comprising 100 parts by mass of a chloroprene-based rubber, 0.1 to 10 parts by mass of an organic peroxide, and 0.1 to 40 parts by mass of a compound having one or more thioether structures is provided.

Various embodiments of the present invention are illustrated below. The embodiments shown below can be combined with each other.

Preferably, the chloroprene-based rubber comprises a chloroprene polymer containing an unsaturated nitrile monomer unit.

Preferably, the compound having one or more thioether structures has two or more ether structures.

Preferably, the compound having one or more thioether structures has a molecular weight of 300 or more.

Preferably, the unsaturated nitrile monomer is acrylonitrile.

Preferably, the chloroprene-based rubber composition comprises 0.5 to 4 parts by mass of a maleimide compound with respect to 100 parts by mass of the chloroprene-based rubber.

Preferably, the chloroprene-based rubber composition comprises 2 to 75 parts by mass of acetylene black with respect to 100 parts by mass of the chloroprene-based rubber.

Preferably, the chloroprene-based rubber composition comprises 1 to 25 parts by mass of zinc powder with respect to 100 parts by mass of the chloroprene-based rubber.

According to another aspect of the present invention, a vulcanizate of the chloroprene-based rubber composition is provided.

Moreover, according to still another aspect of the present invention, a vulcanized molded body of the chloroprene-based rubber composition is provided.

Preferred embodiments for carrying out the present invention will be described below. It should be noted that each embodiment described below is one examples of representative embodiment of the present invention, and the scope of the present invention should not be construed narrowly.

### 1. Chloroprene-based Rubber Composition

A chloroprene-based rubber composition according to one embodiment of the present invention comprises 100 parts by mass of a chloroprene-based rubber, 0.1 to 10 parts by mass of an organic peroxide, and 0.1 to 40 parts by mass of a compound having one or more thioether structures. Each component will be described below.

### (1)-1 Chloroprene-based rubber

A chloroprene rubber is mainly composed of a chloroprene polymer. The chloroprene polymer is a homopolymer of 2-chloro-1,3-butadiene (hereinafter referred to as chloroprene), or a copolymer of chloroprene and other monomers that can be copolymerized with chloroprene, or a mixture of these polymers. Other monomers copolymerizable with chloroprene preferably include, for example:
esters of acrylic acid such as methyl acrylate, butyl acrylate, 2-ethylhexyl acrylate, and the like;
esters of methacrylic acid such as methyl methacrylate, butyl methacrylate, 2-ethyl hexyl methacrylate, and the like;
hydroxy(meth)acrylates such as 2-hydroxyethyl(meth)acrylate, 2-hydroxymethyl(meth)acrylate, 2-hydroxypropyl(meth)acrylate, and the like; and
2,3-dichloro-1,3-butadiene, 1-chloro-1,3-butadiene, butadiene, isoprene, ethylene, styrene, acrylonitrile, and the like.

The chloroprene-based rubber according to one embodiment of the present invention preferably contains a chloroprene polymer containing an unsaturated nitrile monomer unit, that is, a copolymer of a chloroprene monomer and an unsaturated nitrile monomer. Examples of the unsaturated nitrile monomer include acrylonitrile, methacrylonitrile, ethacrylonitrile, phenylacrylonitrile, and the like. These can be used alone, or two or more of these can be used in combination. Among these, acrylonitrile is preferable from the viewpoint of ease of production and oil resistance. By including the chloroprene polymer containing the unsaturated nitrile monomer unit as the chloroprene-based rubber, the oil resistance of the vulcanized molded body obtained from the chloroprene-based rubber composition can be improved, and the compression set resistance can be improved. The chloroprene polymer composition that can give a vulcanized molded body having an excellent balance of compression set resistance, heat resistance, and oil resistance can be obtained.

When the chloroprene-based rubber contains a copolymer of chloroprene and other monomers copolymerizable with chloroprene, the chloroprene-based rubber preferably contains 30% by mass or less, more preferably 20% by mass or less of a monomer unit derived from other monomers copolymerizable with chloroprene with respect to 100% by mass of the chloroprene-based rubber. By adjusting the content of the monomer unit derived from other monomers within this range, the effect of copolymerizing these monomers can be exhibited without impairing the properties of the resulting chloroprene-based rubber composition.

When the chloroprene-based rubber contains a chloroprene polymer containing an unsaturated nitrile monomer unit, the chloroprene polymer preferably contains 30% by mass or less, more preferably 1 to 30% by mass, and even more preferably 4 to 20% by mass of the unsaturated nitrile monomer with respect to 100% by mass of the chloroprene-based rubber. The content of the unsaturated nitrile monomer unit is specifically, for example, 1, 2, 3, 4, 5, 6, 7, 8, 9, 10, 11, 12, 13, 14, 15, 16, 17, 18, 19, 20, 22, 24, 26, 28, 30% by mass with respect to 100% by mass of the chloroprene-based rubber, and may be in the range between the two values exemplified herein. By adjusting the content of the unsaturated nitrile monomer unit within this range, the oil resistance of the vulcanized molded body obtained from the chloroprene-based rubber composition can be improved, and the compression set resistance can be improved without impairing the properties of the resulting chloroprene-based rubber composition. The chloroprene polymer composition that can give a vulcanized molded body having an excellent balance of compression set resistance, heat resistance, and oil resistance can be obtained.

When the chloroprene-based rubber is a mixture of a plurality of types of chloroprene polymers, the amount of the monomer unit derived from other monomers copolymerizable with chloroprene contained in the chloroprene-based rubber means the total amount of the monomer unit derived from other monomers copolymerizable with chloroprene contained in each chloroprene polymer in the chloroprene rubber. The amount of the unsaturated nitrile monomer unit contained in the chloroprene-based rubber means the total amount of the unsaturated nitrile monomer unit contained in each chloroprene polymer in the chloroprene-based rubber.

Other monomers to be copolymerized with chloroprene are not limited to one type, and, for example, three or more types of monomers including chloroprene may be copolymerized. Also, the polymer structure of the polymer is not particularly limited.

### (1)-2 Manufacturing Method of Chloroprene-based Rubber

The method for manufacturing the chloroprene-based rubber is not particularly limited. The chloroprene rubber is obtained by emulsion polymerization of raw material monomers including chloroprene as a main component in the presence of a polymerization reaction catalyst, a polymerization initiator, a chain transfer agent, or the like, using rosin or the like as an emulsifying dispersant.

Examples of the catalysts for the polymerization reaction include inorganic peroxides such as potassium sulfate, and organic peroxides such as ketone peroxides, peroxyketals, hydroperoxides, dialkyl peroxides, and diacyl peroxides. Catalyst activators include sodium sulfite, potassium sulfite, iron(II) oxide, anthraquinone, β-sodium sulfonate, formamidinesulfonic acid, L-ascorbic acid and the like.

The polymerization initiator is not particularly limited, and known polymerization initiators generally used for emulsion polymerization of chloroprene monomer, such as potassium persulfate, ammonium persulfate, sodium persulfate, hydrogen peroxide, t-butyl hydroperoxide, and the like, may be used.

The chain transfer agent is also not particularly limited, and those commonly used for emulsion polymerization of chloroprene can be used. Specifically, example of the chain transfer agent preferably used include:
long-chain alkylmercaptans such as n-dodecylmercaptan, t-dodecylmercaptan, n-octylmercaptan;
xanthogen compounds such as diisopropyl xanthogen disulfide and diethyl xanthogen disulfide;
iodoform,
thiocarbonyl compounds such as benzyl 1-pyrrole dithiocarbamate (also known as benzyl 1-pyrrole carbodithioate), benzyl phenyl carbodithioate, 1-benzyl-N,N dimethyl-4-aminodithiobenzoate, 1-benzyl-4-methoxydithiobenzoate, 1-phenylethylimidazole dithiocarbamate (also known as 1-phenylethylimidazole carbodithioate), benzyl-1-(2-pyrrolidinone)dithiocarbamate (also known as benzyl-1-(2-pyrrolidinone)carbodithioate), benzyl phthalimidyl dithiocarbamate (also known as benzyl phthalimidyl carbodithioate), 2-cyanoprop-2-yl-1-pyrroledithiocarbamate (also known as 2-cyanoprop-2-yl-1-pyrrolecarbodithioate), 2-cyanobut-2-yl-1-pyrroledithiocarbamate (also known as 2-cyanobut-2-yl-1-pyrrolecarbodithioate), benzyl-1-imidazole dithiocarbamate (also known as benzyl-1-imidazole carbodithioate), 2-cyanoprop-2-yl-N,N-dimethyldithiocarbamate, benzyl-N,N-diethyldithiocarbamate, cyanomethyl-1-(2-pyrrolidone)dithiocarbamate, 2-(ethoxycarbonylbenzyl)prop-2-yl-N,N-diethyldithiocarbamate, 1-phenylethyl dithiobenzoate, 2-phenylprop-2-yl dithiobenzoate, 1-acetic acid-1-yl-ethyl dithiobenzoate, 1-(4-methoxyphenyl)ethyl dithiobenzoate, benzyldithioacetate, ethoxycarbonylmethyldithioacetate, 2-(ethoxycarbonyl)prop-2-yl dithiobenzoate, 2-cyanoprop-2-yl dithiobenzoate, t-butyl dithiobenzoate, 2,4,4-trimethylpent-2-yl dithiobenzoate, 2-(4-chlorophenyl)-prop-2-yl dithiobenzoate, 3-vinylbenzyl dithiobenzoate, 4-vinylbenzyl dithiobenzoate, benzyldiethoxyphosphinyldithioformate, t-butyl trithioperbenzoate, 2-phenylprop-2-yl-4-chlorodithiobenzoate, naphthalene-1-carboxylic acid-1-methyl-1-phenyl-ethyl ester, 4-cyano-4-methyl-4-thiobenzylsulfanylbutyric acid, dibenzyltetrathioterephthalate, carboxymethyl dithiobenzoate, poly(ethylene oxide) with a dithiobenzoate end group, poly(ethylene oxide) with a 4-cyano-4-methyl-4-thiobenzylsulfanylbutyric acid end group, 2-[(2-phenylethanethiol)sulfanyl]propanoic acid, 2-[(2-phenylethanethiol)sulfanyl]succinic acid, 3,5-dimethyl-1H-pyrazole-1-carbodithioate potassium, cyanomethyl-3,5-dimethyl-1H pyrazole-1-carbodithioate, cyanomethylmethyl-(phenyl)dithiocarbamate, benzyl-4-chlorodithiobenzoate, phenylmethyl-4-chlorodithiobenzoate, 4-nitrobenzyl-4-chlorodithiobenzoate, phenylprop-2-yl-4-chlorodithiobenzoate, 1-cyano-1-methylethyl-4-chlorodithiobenzoate, 3-chloro-2-butenyl-4-chlorodithiobenzoate, 2-chloro-2-butenyl dithiobenzoate, benzyldithioacetate, 3-chloro-2-butenyl-1H pyrrole-1-dithiocarboxylic acid, 2-cyanobutane-2-yl-4-chloro-3,5-dimethyl-1H-pyrazole-1-carbodithioate, cyanomethyl methyl (phenyl) carbamodithioate, 2-cyano-2-propyldodecyltrithiocarbonate, dibenzyltrithiocarbonate, butyl benzyl trithiocarbonate, 2-[[(butylthio)thioxomethyl]thio]propionic acid, 2-[[(dodecylthio)thioxomethyl]thio]propionic acid, 2-[[(butylthio)thioxomethyl]thio]succinic acid, 2-[[(dodecylthio)thioxomethyl]thio]succinic acid, 2-[[(dodecylthio)thioxomethyl]thio]-2-methylpropionic acid, 2,2 -[carbonothioylbis(thio)]bis[2-methylpropionic acid], 2-amino-1-methyl-2-oxoethylbutyltrithiocarbonate, benzyl-2-[(2-hydroxyethyl)amino]-1-methyl-2-oxoethyltrithiocarbonate, 3-[[[(t-butyl)thio]thioxomethyl]thio]propionic acid, cyanomethyldodecyltrithiocarbonate, diethylaminobenzyltrithiocarbonate, and dibutylaminobenzyltrithiocarbonate.

The polymerization temperature of the chloroprene latex is not particularly limited and can be in the range of 0 to 50°C, preferably 20 to 50°C, at which emulsion polymerization is generally performed. The final polymerization rate of the chloroprene-based rubber obtained in the above-described polymerization step is not particularly limited, but is preferably arbitrarily adjusted within the range of 30 to 100%. In order to adjust the final conversion, the polymerization may be terminated by adding a polymerization terminator for terminating the polymerization reaction when the desired conversion is achieved.

The polymerization terminator is not particularly limited, and these commonly used can be used. Specific examples of the polymerization terminator include thiodiphenylamine, 4-tertiarybutylcatechol, 2,2-methylenebis-4-methyl-6-tertiarybutylphenol and the like.

Next, unreacted monomers are removed from the polymerization liquid obtained by the polymerization step. The method is not particularly limited, and includes, for example, a steam stripping method. After that, the chloroprene-based rubber is obtained through conventional processes such as adjusting the pH, freezing and coagulation, washing with water, and drying with hot air.

### (2) organic peroxide

The chloroprene-based rubber composition of the present invention contains 0.1 to 10 parts by mass of organic peroxide with respect to 100 parts by mass of chloroprene-based rubber.

The organic peroxide is added to the rubber composition as a vulcanization aid and is not particularly limited, and examples include dicumyl peroxide, benzoyl peroxide, 1,1-bis(t-butylperoxy)-3,5,5-trimethylcyclohexane, diisobutyryl peroxide, cumyl peroxyneodecanoate, di-n-propyl peroxydicarbonate, diisopropyl peroxydicarbonate, di-sec-butyl peroxydicarbonate, 1,1,3,3-tetramethylbutyl peroxyneodecanoate, di(4-t-butylcyclohexyl)peroxydicarbonate, di(2-ethylhexyl) peroxydicarbonate, t-hexyl peroxyneodecanoate, t-butyl peroxyneodecanoate, t-butyl peroxyneoheptanoate, t-hexyl peroxypivalate, t-butyl peroxypivalate, di(3,5,5-trimethylhexanoyl) peroxide, dilauroyl peroxide, 1,1,3,3-tetramethylbutyl peroxy-2-ethylhexanoate, disuccinic peroxide, 2,5-dimethyl-2,5-di(2-ethylhexanoylperoxy)hexane, t-hexylperoxy-2-ethylhexanoate, di(4-methylbenzoyl) peroxide, t-butyl peroxy-2-ethylhexanoate, di(3-methylbenzoyl) peroxide, benzoyl (3-methylbenzoyl) peroxide, dibenzoyl peroxide, 1,1-di(t-butylperoxy)-2-methylcyclohexane, 1,1-di(t-hexylperoxy)-3,3,5-trimethylcyclohexane, 1,1-di(t-hexylperoxy)cyclohexane, 1,1-di(t-butylperoxy)cyclohexane, 2,2-di(4,4-di-(t-butylperoxy)cyclohexyl)propane, t-hexyl peroxy isopropyl monocarbonate, t-butyl peroxymaleate, t-butyl peroxy-3,5,5-trimethylhexanoate, t-butyl peroxylaurate, t-butyl peroxyisopropyl monocarbonate, t-butyl peroxy 2-ethylhexyl monocarbonate, t-hexyl peroxybenzoate, 2,5-dimethyl-2,5-di(benzoylperoxy)hexane, t-butyl peroxyacetate, 2,2-di-(t-butylperoxy)butane, t-butyl peroxybenzoate, n-butyl 4,4-di-(t-butylperoxy)valerate, 1,4-bis[(t-butylperoxy)isopropyl]benzene, di-t-hexyl peroxide, 2,5-dimethyl-2,5-di(t-butylperoxy)hexane, t-butylcumyl peroxide, di-t-butyl peroxide, p-menthane hydroperoxide, 2,5-dimethyl-2,5-di(t-butylperoxy)hexyne-3, diisopropylbenzene hydroperoxide, 1,1,3,3-tetramethylbutyl hydroperoxide, cumene hydroperoxide, and t-butyl hydroperoxide.

From the viewpoint of improving the compression set resistance of the resulting vulcanized molded body, 1,4-bis[(t-butylperoxy)isopropyl]benzene or n-butyl 4,4-di-(t-butylperoxy)valerate is preferably used. These organic peroxides can be used alone, or two or more of these can be used in combination.

The amount of the organic peroxide added is 0.1 to 10 parts by mass, preferably 0.1 to 8 parts by mass, more preferably 0.2 to 7 parts by mass, with respect to 100 parts by mass of the chloroprene-based rubber. The amount of the organic peroxide to be added is 0.1, 0.2, 0.4, 0.6, 0.8, 1, 2, 3, 4, 5, 6, 7, 8, 9, 10 parts by mass with respect to 100 parts by mass of the chloroprene-based rubber and may be within a range between any two of the numerical values exemplified here. By setting the amount of the organic peroxide added to 0.1 parts by mass or more, the vulcanization of the rubber composition can be accelerated, the vulcanization can be sufficiently progressed within the specified vulcanization time, and a vulcanizate excellent in compression set resistance and heat resistance can be obtained. In addition, by setting the amount of the organic peroxide to be added to 10 parts by mass or less and using the organic peroxide in combination with a compound containing a thioether structure described later, a rapid increase in the vulcanization density can be prevented, and thermal deterioration due to the organic peroxide remaining after cross-linking and the consumption of the heat-resistant antioxidants associated with the decomposition of the organic peroxide can be suppressed, and the deterioration of performance in the rubber such as compression set resistance in normal condition and after heat aging can be suppressed.

### (3) Compound Having Thioether Structure

The chloroprene-based rubber composition according to the present invention contains 0.1 to 40 parts by mass of a compound having one or more thioether structure with respect to 100 parts by mass of the chloroprene-based rubber. According to the present invention, by using the compound having a thioether structure in combination with the organic peroxide in the chloroprene-based rubber composition, vulcanization can be sufficiently progressed within a specified vulcanization time, vulcanizate excellent in compression set resistance and heat resistance can be obtained, and by decomposing the organic peroxide remaining after crosslinking and hydroperoxides generated by thermal deterioration, heat resistance is improved.

A compound having one or more thioether structures according to one embodiment of the present invention can be represented, for example, by the following formula (1), or can have a structural unit represented by formula (2). Here, R¹, R², R³ and R⁴ can be any organic group which may have a substituent. 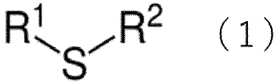 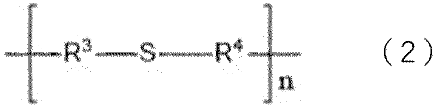 When the compound having one or more thioether structures according to one embodiment of the present invention is represented by formula (1), at least one of R¹ and R² preferably contains an ether structure. When the compound having one or more thioether structures according to one embodiment of the present invention contains a structural unit represented by formula (2), at least one of R³ and R⁴ preferably contains an ether structure. Moreover, in the formula (2), n is an arbitrary natural number of 1 or more. Moreover, the compound having one or more thioether structures according to one embodiment of the present invention preferably has two or more ether structures.

In one aspect, R¹, R², R³, and R⁴ preferably have an alkylene group with 2 to 20 carbon atoms, more preferably an alkylene group with 2 to 11 carbon atoms. In one aspect, R¹, R², R³, and R⁴ may have a carbonyl group.

Moreover, the compound having one or more thioether structures preferably has a molecular weight of 300 or more, and, for example, the upper limit of the molecular weight can be set to 1200. The molecular weight of the compound having one or more thioether structures may be 300, 400, 500, 600, 700, 800, 900, 1000, 1100 and 1200, and may be in the range between the two values exemplified herein. The compound having a thioether structure can be used alone, or two or more of these can be used in combination.

The amount of the compound having a thioether structure added is 0.1 to 40 parts by mass, preferably 0.2 to 35 parts by mass, more preferably 0.5 to 33 parts by mass with respect to 100 parts by mass of the chloroprene-based rubber. The amount of the compound having a thioether structure to be added is, for example, 0.1, 0.2, 0.5, 1, 2, 3, 4, 5, 6, 7, 8, 9, 10, 11, 12, 13, 14, 15, 20, 25, 30, 35, 40 parts by mass, and may be in the range between the two values exemplified herein. By setting the amount of the compound having a thioether structure to be 0.1 parts by mass or more, the organic peroxide remaining after cross-linking, when an organic peroxide is added as a vulcanization aid, and the hydroperoxide generated by thermal deterioration are decomposed and a vulcanizate having excellent heat resistance can be obtained. In addition, by setting the amount of the compound having a thioether structure to 40 parts by mass or less, the vulcanization proceeds sufficiently, and a rubber composition, which can have sufficient moldability and give a vulcanized molded body having compression set resistance and heat resistance, is obtained.

### (4) Maleimide Compound

The chloroprene-based rubber composition according to one embodiment of the present invention can contain 0.5 to 4 parts by mass of the maleimide compound with respect to 100 parts by mass of the chloroprene-based rubber.

The maleimide compound is added to a rubber composition as a vulcanizing agent. Examples of the maleimide include N,N'-o-phenylenebismaleimide, N,N'-m-phenylenebismaleimide, N,N'-p-phenylenebismaleimide, N,N'-(4,4'-diphenylmethane)bismaleimide, 2,2-bis-[4-(4-maleimidophenoxy)phenyl]propane, bis(3-ethyl-5-methyl-4-maleimidophenyl)methane, bisphenol A diphenyletherbismaleimide, 3,3'-dimethyl-5,5'-diethyl-4,4'-diphenylmethanebismaleimide, 4-methyl-1,3-phenylenebismaleimide, 1,6'-bismaleimido-(2,2,4-trimethyl)hexane. From the viewpoint of improving the heat resistance, compression set resistance, and low temperature rise of the resulting vulcanized molded body, N,N'-m-phenylenebismaleimide is particularly preferably used.

The amount of the maleimide compound added is preferably 0.5 to 4 parts by mass, preferably 1 to 3 parts by mass, and more preferably 1.5 to 2.5 parts by mass with respect to 100 parts by mass of the chloroprene-based rubber. When the amount of the maleimide compound added is 0.5 parts by mass or more, vulcanization of the obtained rubber composition proceeds more sufficiently, and a vulcanized molded body having good compression set resistance, elongation at break after heat aging, and low temperature rise can be obtained. In addition, when the amount of the maleimide compound added is 4 parts by mass or less, the rubber elasticity of the resulting vulcanized molded body can be sufficiently maintained, and deterioration of compression set resistance after heat aging can be suppressed.

In addition to these maleimide compounds, the rubber composition of the present invention may also contain a vulcanization accelerator generally used for vulcanization of chloroprene-based rubbers, such as a thiourea-based, guanidine-based, thiuram-based, and thiazole-based vulcanization accelerator. Examples of the thiourea-based vulcanization accelerator include ethylenethiourea, diethylthiourea, trimethylthiourea, triethylthiourea, N,N'-diphenylthiourea and the like. Trimethylthiourea and ethylenethiourea are particularly preferred. Vulcanization accelerators such as dimethylammonium hydrogen isophthalate or 1,2-dimercapto-1,3,4-thiadiazole derivatives can also be used.

### (5) Carbon black

A chloroprene-based rubber composition according to one embodiment of the present invention may contain carbon black. By adding carbon black, the mechanical properties of the vulcanized rubber obtained by vulcanizing the chloroprene-based rubber composition can be improved. The chloroprene-based rubber composition according to one embodiment of the present invention preferably contains 2 to 75 parts by mass, more preferably 10 to 60 parts by mass of carbon black with respect to 100 parts by mass of the chloroprene-based rubber. Further, the chloroprene-based rubber composition according to one embodiment of the present invention preferably uses acetylene black as carbon black and preferably contains 2 to 75 parts by mass, more preferably 10 to 70 parts by mass of acetylene black with respect to 100 parts by mass of the chloroprene-based rubber.

### (6) Zinc Powder

The chloroprene-based rubber composition according to one embodiment of the present invention may contain zinc powder. The heat resistance can be improved by blending zinc powder. The chloroprene-based rubber composition according to one embodiment of the present invention preferably contains 1 to 25 parts by mass, more preferably 1 to 15 parts by mass of zinc powder with respect to 100 parts by mass of the chloroprene-based rubber.

### (7) Other compounds

The chloroprene-based rubber composition according to one embodiment of the present invention can contain, for example, the following components in addition to the components described above.

### Vulcanizing Agent/Vulcanizing Aid

The chloroprene-based rubber composition according to one embodiment of the present invention can further contain a vulcanizing agent, a vulcanizing aid, and a vulcanization accelerator, which is other than the maleimide compound and the organic peroxide. It is not particularly limited, and, for example, a vulcanizing agent other than the maleimide compound and the organic peroxide can include a metal oxide. Specific examples include zinc oxide, magnesium oxide, lead oxide, trilead tetroxide, iron trioxide, titanium dioxide, calcium oxide, and hydrotalcite. One of these compounds can be used alone, or two or more of these compounds can be used in combination. When these vulcanizing agents are additionally used, the amount is preferably 3 to 15 parts by mass with respect to 100 parts by mass of the chloroprene-based rubber composition.

In order to improve the vulcanization speed and vulcanization density of the rubber composition, in addition to the above-mentioned organic peroxide and maleimide compound, at least one compound selected from a bifunctional ester compound or trifunctional ester compound may be added as a vulcanization aid.

Specific examples of the bifunctional ester compound or trifunctional ester compound include trimethylolpropane, ethylene glycol dimethacrylate, triallyl isocyanate, and triallyl cyanate, and these can also be used in combination.

In addition, a plasticizer, a filler and a reinforcing material other than carbon black, a processing aid, an antioxidant, an acid acceptor, and the like may be added to the rubber composition as long as the effects of the present invention are not impaired.

Examples of the filler and the reinforcing material include, for example, carbon black, clay, talc, calcium carbonate, and the like. The filler and reinforcing material can be added in amounts that do not impair the heat resistance, and the amounts of these are preferably in the range of 5 to 100 parts by mass with respect to 100 parts by mass of the rubber composition.

The plasticizer is not particularly limited as long as it is compatible with the chloroprene-based rubber. Examples of the plasticizer include vegetable oils such as rapeseed oil, phthalate-based plasticizers, DOS, DOA, ester-based plasticizers, ether- and ester-based plasticizers, thioether-based plasticizers, aromatic oils, naphthenic oils, and the like. These can be used alone, or two or more of these can be used in combination according to the properties required for the rubber composition. For example, when the above plasticizer is further included, the amount added can be 5 to 50 parts by mass, more preferably 5 to 30 parts by mass with respect to 100 parts by mass of the rubber composition.

Examples of the processing aid include fatty acids such as stearic acid, paraffin-based processing aids such as polyethylene, and fatty acid amides. The amount of the processing aid can be 0.1 to 5 parts by mass with respect to 100 parts by mass of the rubber composition.

As the antioxidant, general antioxidants such as amine-based antioxidants, imidazole-based antioxidants, metal carbamates, phenol-based antioxidants, and wax can be used. Examples of the antioxidant having a large effect of improving heat resistance include amine-based antioxidants such as 4,4'-bis(α,α-dimethylbenzyl)diphenylamine, octylated diphenylamine, and the like. In particular, 4,4'-bis(α,α-dimethylbenzyl)diphenylamine has a great effect of improving heat resistance. These antioxidants can be used alone, or two or more of these can be used in combination. When the antioxidant is used, the amount of the antioxidant added can be, for example, 0.5 to 5 parts by mass with respect to 100 parts by mass of the rubber composition.

### 2. Method for manufacturing chloroprene-based rubber composition

The chloroprene-based rubber composition of one embodiment of the invention is obtained by kneading the above compounds at a temperature below the vulcanization temperature. Examples of the kneading device include a mixer, a Banbury mixer, a kneader mixer, two roll mills, and the like.

### 3. Vulcanized Molded Body

A vulcanizate according to one embodiment of the present invention is a vulcanizate of the above-described chloroprene-based rubber composition according to one embodiment of the present invention. A vulcanized molded body according to one embodiment of the present invention is a vulcanized molded body of the chloroprene-based rubber composition according to one embodiment of the above-described present invention. Each of the vulcanizate and the vulcanized molded body of the rubber composition is obtained by molding the above rubber composition into various desired shapes and then vulcanizing it, or by molding the rubber composition into various shapes after vulcanizing the rubber composition. Examples of the methods for molding the vulcanized molded body from the rubber composition include methods such as press molding, extrusion molding, and calender molding.

The temperature at which the rubber composition is vulcanized may be appropriately set according to its composition, and is usually in the range of 140 to 220°C, preferably 160 to 190°C. Also, the vulcanization time may be appropriately set depending on the composition and shape of the rubber composition, and is usually in the range of 10 to 60 minutes.

A vulcanizate and a vulcanized molded body according to one embodiment of the present invention are obtained by vulcanizing and molding the rubber composition according to one embodiment of the present invention described above, and are excellent in compression set resistance and heat resistance.

### (1) Oil Resistance

The vulcanized molded body according to one embodiment of the present invention preferably has a volume change rate (ΔV) of 35 or less, more preferably a volume change rate (ΔV) of 25 or less after immersion in IRM903 oil at 130°C for 72 hours, measured in accordance with JIS K6258.

### (2) Heat Resistance

The vulcanized molded body according to one embodiment of the present invention preferably has a rate of change in elongation at break (Eb) of 48 or more, more preferably -36 or more, after the test piece is left under the conditions of 150°C and 72 hours, which is measured in accordance with JIS K 6257:2017.

### (3) Compression Set Resistance

The vulcanized molded body according to one embodiment of the present invention preferably have a compression set resistance of 35% or less, more preferably 30% or less, and even more preferably 25% or less, measured at a test temperature of 130°C and a test time of 72 hours, in accordance with JIS K 6262:2013. The lower limit of the compression set resistance may be, for example, 0% or more.

When the chloroprene-based rubber composition according to one embodiment of the present invention is press-vulcanized under the conditions of 180° C for 30 minutes to produce a vulcanized molded body having a sheet shape with a thickness of 2 mm, the vulcanized molded body preferably has the above properties.

### EXAMPLES

### < Manufacturing Chloroprene Polymer (AN 5%)>

To a polymerization vessel with an inner volume of 3 liters equipped with a heating and cooling jacket and a stirrer, 32 parts by mass of chloroprene monomer, 14 parts by mass of acrylonitrile monomer, 0.5 parts by mass of diethylxanthogen disulfide, 200 parts by mass of pure water, 5.00 parts by mass of potassium rosinate (manufactured by Harima Chemicals Group, Inc.), 0.40 parts by mass of sodium hydroxide, and 2.0 parts by mass of sodium salt of β-naphthalenesulfonic acid formalin condensate (manufactured by Kao Corporation) were added. 0.1 part by mass of potassium persulfate was added as a polymerization initiator, and emulsion polymerization was carried out at a polymerization temperature of 40°C under a nitrogen stream. The chloroprene monomer was added in portions from 20 seconds after the initiation of polymerization. Based on the change in the heat quantity of the refrigerant for 10 seconds from the start of polymerization, the flow rate to be added in portions was adjusted with a solenoid valve. Thereafter, the flow rate was readjusted every 10 seconds, and the addition was continuously performed in portions. When the polymerization rate with respect to the total amount of the chloroprene monomer and the acrylonitrile monomer reached 50%, phenothiazine as a polymerization terminator was added to terminate the polymerization. Thereafter, unreacted monomers were removed from the reaction solution under reduced pressure to obtain a latex containing a chloroprene-acrylonitrile copolymer.

The pH of the obtained latex containing the chloroprene-acrylonitrile copolymer is adjusted to 7.0 and freeze-coagulated on a metal plate cooled to -20°C and demulsified to obtain a sheet. The sheet was washed with water and dried at 130°C for 15 minutes to obtain a solid chloroprene-acrylonitrile chloroprene-based rubber containing 5% by mass of acrylonitrile monomer unit (AN 5%).

The amount of the unsaturated nitrile monomer unit contained in the chloroprene-based rubber was calculated from the content of nitrogen atoms in the chloroprene-based rubber. Specifically, the nitrogen atom content in 100 mg of the chloroprene-based rubber was measured using an elemental analyzer (SUMIGRAPH 220F: manufactured by Sumika Chemical Analysis Service, Ltd.) to calculate the content of the acrylonitrile monomer unit. The measurement conditions for elemental analysis were as follows. The temperature of the electric furnace was set to 900°C for the reaction furnace, 600°C for the reduction furnace, 70°C for the column temperature, and 100°C for the detector temperature. Oxygen gas was flowed at 0.2 mL/min as combustion gas, and helium gas was flowed at 80 mL/min as carrier gas. Calibration curves were prepared using aspartic acid (10.52%), which has a known nitrogen content, as a standard.

### <Manufacturing Chloroprene-based Rubber (AN10%), (AN15%), (AN20%)>

Each of a chloroprene-based rubber (AN 10%) having 10% by mass of the acrylonitrile monomer unit, a chloroprene-based rubber (AN 15%) having 15% by mass of the acrylonitrile monomer unit, and a chloroprene-based rubber (AN 20%) having 20% by mass of the acrylonitrile monomer unit contained in the chloroprene-based rubber was manufactured in the same manner as the method for manufacturing the chloroprene-based rubber (AN 5%), except that the acrylonitrile monomer added during polymerization was changed so that the amount of acrylonitrile monomer units in the resulting chloroprene-based rubber has 10, 15, or 20% by mass of the acrylonitrile monomer unit.

### (Examples 1 to 21, Comparative Examples 1 to 5)

### (Manufacturing Rubber Composition)

The above-mentioned chloroprene-based rubber and each compound shown in Tables 1 to 3 were kneaded with an 8-inch open roll in the amounts shown in Tables 1 to 3 to obtain rubber compositions. The compounds used in Tables 1 to 3 are as follows.

### < Chloroprene-based rubber >

Chloroprene-based rubbers (AN 5, 10, 15, 20%): chloroprene-based rubbers produced by the above-described method and having 5, 10, 15, and 20% by mass of the acrylonitrile monomer unit respectively.
Mercaptan-modified chloroprene rubber: manufactured by Denka Company Limited (Mooney viscosity ML₁₊₄ (100°C) = 60)

### <Organic Peroxide>

PERBUTYL P-40: "PERBUTYL (registered trademark) P-40" (1,4-bis [(t-butylperoxy) isopropyl] benzene) manufactured by NOF CORPORATION
PERHEXA V-40: "PERHEXA (registered trademark) V-40" (n-butyl 4,4-di-(t-butylperoxy) valerate) manufactured by NOF CORPORATION

### <Maleimide Compound>

VULNOC PM: "VULNOC (registered trademark) PM" (N,N'-m-phenylene bismaleimide) manufactured by OUCHI SHINKO CHEMICAL INDUSTRIAL CO.,LTD

### <Compound Having Thioether Structure>

Vulkanol OT: "Vulkanol OT" (a mixture including compound A containing one or more thioether structures and two or more ether structures and compound B containing one or more thioether structures and three or more ether structures as main components) manufactured by Lanxess AG

Vulkanol 88: "Vulkanol 88" (molecular weight: 308.5, compound with the following structure) manufactured by Lanxess AG

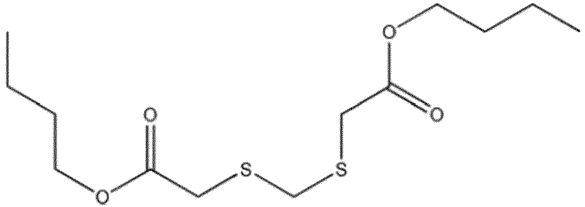

Vulkanol 85: "Vulkanol 85" (compound containing one thioether structure and two or more ether structures) manufactured by Lanxess AG

NOCRAK 400: "NOCRAK (registered trademark) 400" (dilauryl thiodipropionate, molecular weight: 514.84) manufactured by OUCHI SHINKO CHEMICAL INDUSTRIAL CO.,LTD

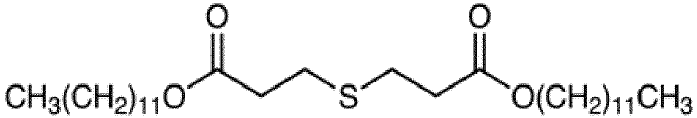

ADEKA STAB AO-412S: "ADEKA STAB AO-412S" (molecular weight: 1161.94) manufactured by ADEKA Corporation

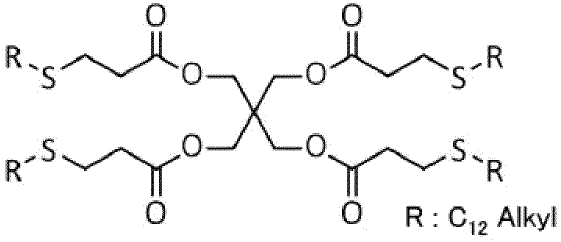

### <Carbon Black>

FEF: "Asahi #60UG" manufactured by Asahi Carbon Co., Ltd.
Acetylene black: "Denka black granules" manufactured by Denka Company Limited

### <Others>

Zinc powder: "Zinc powder #F" manufactured by SAKAI CHEMICAL INDUSTRY CO.,LTD.
Plasticizer: "ADEKA CIZER (registered trademark) R-735" (polyether ester-based) manufactured by ADEKA Corporation
Vulcanizing agent: Zinc oxide: "Zinc oxide type 2" manufactured by SAKAI CHEMICAL INDUSTRY CO.,LTD.
Vulcanization accelerator: NOCCELER TMU: "NOCCELER TMU" (trimethylthiourea) manufactured by OUCHI SHINKO CHEMICAL INDUSTRIAL CO.,LTD
Antioxidant: NOCRAC CD: NOCRAC (registered trademark) CD" (4,4'-bis (a, a-dimethylbenzyl) diphenylamine) manufactured by OUCHI SHINKO CHEMICAL INDUSTRIAL CO.,LTD

Acid acceptor: Kyowamag 150: "Kyowamag (registered trademark) 150" (magnesium oxide) manufactured by Kyowa Chemical Industry Co., Ltd.
Lubricant/processing aid: Stearic acid: "Stearic acid 50S" manufactured by New Japan Chemical Co., Ltd.

### (Manufacturing Vulcanized Molded Body)

The obtained rubber composition was press-vulcanized under conditions of 180°C for 30 minutes to prepare a sheet-like vulcanized molded body having a thickness of 2 mm. The following evaluations were performed on the obtained vulcanized molded bodies. The evaluation results are shown in Tables 1 to 3.

### (Evaluation of vulcanized molded body)

### (1) Oil resistance

### <Measurement of Oil Resistance of Vulcanized Rubber>

The oil resistance of the samples prepared by the method described above was measured according to JIS K6258. The oil type used was IRM903 oil. The oil resistance was evaluated based on the volume change rate (ΔV) after immersion at 130°C for 72 hours according to the following evaluation criteria.
A: The volume change rate (ΔV) was 15 or less.
B: The volume change rate (ΔV) was more than 15 and 25 or less.
C: The volume change rate (ΔV) was more than 25 and 35 or less.
D: The volume change rate (ΔV) was more than 35 and 45 or less.
E: The volume change rate (ΔV) was more than 45 and 55 or less.
F: The volume change rate (ΔV) was over 55.

### (2) Heat resistance

For the sample prepared by the above method, the elongation at break (Eb) was measured after leaving the test piece under the conditions of 150°C for 72 hours in accordance with JIS K 6257:2017, and its rate of change (%). was calculated and evaluated according to the following evaluation criteria.
A: The rate of change was -12 or more.
B: The rate of change was -24 or more and less than -12.
C: The rate of change was -36 or more and less than -24.
D: The rate of change was -48 or more and less than -36.
E: The rate of change was -60 or more and less than -48.
F: The rate of change was less than -60.

### (3) Compression set resistance

Each sample prepared by the method described above was measured at a test temperature of 130°C and a test time of 72 hours, in accordance with JIS K 6262:2013, and evaluated according to the following evaluation criteria.
A: The compression set resistance was 0% or more and 25% or less.
B: The compression set resistance was more than 25% and 30% or less.
C: The compression set resistance was more than 30% and 35% or less.
D: The compression set resistance was more than 35% and 40% or less.
E: The compression set resistance was more than 40% and 45% or less.

**[Table 1]**

| Table 1 | | | Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| | Chloroprene-based rubber composition | Chloroprene-based rubber composition | | | | | | | | | | | |
| | | (AN5%) | | | | | | | | | | | |
| | | Chloroprene-based rubber composition | 100 | 100 | 100 | 100 | 100 | 100 | 100 | 100 | 100 | 100 | 100 |
| | | (AN10%) | | | | | | | | | | | |
| | | Chloroprene-based rubber composition | | | | | | | | | | | |
| | | (AN15%) | | | | | | | | | | | |
| | | Chloroprene-based rubber composition | | | | | | | | | | | |
| | | (AN20%) | | | | | | | | | | | |
| | | Mercaptan-modified Chloroprene rubber | | | | | | | | | | | |
| | Organic peroxide | PERBUTYL P-40 | 1 | 1 | 1 | 1 | 1 | 1 | 1 | 1 | 1 | 1 | 1 |
| | | PERHEXA V-40 | | | | | | | | | | | |
| | Compound having thioether structure | Vulkanol OT | 2 | 5 | 10 | 20 | 30 | | | | | 10 | 10 |
| | | Vulkanol 88 | | | | | | 10 | | | | | |
| Composition (Parts by mass) | | Vulkanol 85 | | | | | | | 10 | | | | |
| | | NOCRAK 400 | | | | | | | | 2 | | | |
| | | ADEKA STAB AO-412S | | | | | | | | | 2 | | |
| | Carbon black | FEF | 40 | 40 | 40 | 40 | 40 | 40 | 40 | 40 | 40 | 40 | 40 |
| | | Acetylene black | | | | | | | | | | | |
| | Zinc powder | Zinc powder | | | | | | | | | | | |
| | Plasticizer | RS-735 | | | | | | | | 10 | 10 | | |
| | Vulcanizing agent | Zinc oxide type 2 | 5 | 5 | 5 | 5 | 5 | 5 | 5 | 5 | 5 | 5 | 5 |
| | Acid acceptor | Kvowamag 150 | 4 | 4 | 4 | 4 | 4 | 4 | 4 | 4 | 4 | 4 | 4 |
| | Vulcanization accelerator | NOCCELER TMU | | | | | | | | | | | |
| | Co-crosslinking agent | VULNOC PM | 2 | 2 | 2 | 2 | 2 | 2 | 2 | 2 | 2 | 1 | 3 |
| | Antioxidant | NOCRAK CD | 3 | 3 | 3 | 3 | 3 | 3 | 3 | 3 | 3 | 3 | 3 |
| | Lubricant/Processing aid | Stearic acid | 0.5 | 0.5 | 0.5 | 0.5 | 0.5 | 0.5 | 0.5 | 0.5 | 0.5 | 0.5 | 0.5 |
| Evaluation | Oil resistance | | B | B | B | B | B | B | B | B | B | B | B |
| | Heat resistance | | D | D | C | C | C | C | C | D | D | C | C |
| | Compression set resistance | | A | A | A | A | A | A | A | A | A | B | A |

| Table 2 | | | Example | | | | | | | | | | |
|---|---|---|---|---|---|---|---|---|---|---|---|---|---|
| | | | 12 | 13 | 14 | 15 | 16 | 17 | 18 | 19 | 20 | 21 | 22 |
| | Chloroprene-based rubber composition | Chloroprene-based rubber composition (AN5%) | | | | | | | | 100 | | | |
| | | Chloroprene-based rubber composition | 100 | 100 | 100 | 100 | 100 | 100 | 100 | | | | |
| | | (AN10%) | | | | | | | | | | | |
| | | Chloroprene-based rubber composition | | | | | | | | | 100 | | |
| | | (AN15%) | | | | | | | | | | | |
| | | Chloroprene-based rubber composition | | | | | | | | | | 100 | |
| | | (AN20%) | | | | | | | | | | | |
| | | Mercaptan-modified Chloroprene rubber | | | | | | | | | | | 100 |
| | Organic peroxide | PERBUTYL P-40 | 1 | | 1 | 1 | 1 | 2 | 5 | 1 | 1 | 1 | 1 |
| | | PERHEXA V-40 | | 1 | | | | | | | | | |
| | Compound having thioether structure | Vulkanol OT | 10 | 10 | 10 | 10 | 10 | 10 | 10 | 10 | 10 | 10 | 10 |
| Composition (Parts by mass) | | Vulkanol 88 | | | | | | | | | | | |
| | | Vulkanol 85 | | | | | | | | | | | |
| | | NOCRAK 400 | | | | | | | | | | | |
| | | ADEKA STAB AO-412S | 2 | | | | | | | | | | |
| | Carbon black | FEF | 40 | 40 | | | 40 | 40 | 40 | 40 | 40 | 40 | 40 |
| | | Acetylene black | | | 35 | 35 | | | | | | | |
| | Zinc powder | Zinc powder | | | | 5 | | | | | | | |
| | Plasticizer | RS-735 | | | | | | | | | | | |
| | Vulcanizing agent | Zinc oxide type 2 | 5 | 5 | 5 | 5 | 5 | 5 | 5 | 5 | 5 | 5 | 5 |
| | Acid acceptor | Kvowamag 150 | 4 | 4 | 4 | 4 | 4 | 4 | 4 | 4 | 4 | 4 | 4 |
| | Vulcanization accelerator | NOCCELER TMU | | | | | | | | | | | |
| | Co-crosslinking agent | VULNOC PM | 2 | 2 | 2 | 2 | | | | 2 | 2 | 2 | 2 |
| | Antioxidant | NOCRAK CD | 3 | 3 | 3 | 3 | 3 | 3 | 3 | 3 | 3 | 3 | 3 |
| | Lubricant/Processing aid | Stearic acid | 0.5 | 0.5 | 0.5 | 0.5 | 0.5 | 0.5 | 0.5 | 0.5 | 0.5 | 0.5 | 0.5 |
| Evaluation | Oil resistance | | B | B | B | B | B | B | B | C | B | A | E |
| | Heat resistance | | B | C | B | A | C | C | D | C | C | C | C |
| | Compression set resistance | | A | A | A | B | C | B | B | A | A | A | B |

**[Table 3]**

| Table 3 | | | Comparative Example | | | |
|---|---|---|---|---|---|---|
| | | | 1 | 2 | 3 | 4 |
| Composition (Parts by mass) | Chloroprene-based rubber composition | Chloroprene-based rubber composition | | | | |
| | | (AN5%) | | | | |
| | | Chloroprene-based rubber composition | 100 | 100 | 100 | 100 |
| | | (AN10%) | | | | |
| | | Chloroprene-based rubber composition | | | | |
| | | (AN15%) | | | | |
| | | Chloroprene-based rubber composition | | | | |
| | | (AN20%) | | | | |
| | | Mercaptan-modified Chloroprene rubber | | | | |
| | Organic peroxide | PERBUTYL P-40 | | 1 | 1 | 15 |
| | Compound having thioether structure | Vulkanol OT | 10 | | 50 | 10 |
| | Carbon black | FEF | 50 | 40 | 40 | 40 |
| | | Acetylene black | | | | |
| | Zinc powder | Zinc powder | | | | |
| | Plasticizer | RS-735 | | 10 | | |
| | Vulcanizing agent | Zinc oxide type 2 | 5 | 5 | 5 | 5 |
| | Acid acceptor | Kvowamag 150 | 4 | 4 | 4 | 4 |
| | Vulcanization accelerator | NOCCELER TMU | 1 | | | |
| | Co-crosslinking agent | VULNOC PM | | 2 | 2 | |
| | Antioxidant | NOCRAK CD | 3 | 3 | 3 | 3 |
| | Lubricant/Processing aid | Stearic acid | 0.5 | 0.5 | 0.5 | 0.5 |
| Evaluation | Oil resistance | | B | B | 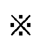 | B |
| | Heat resistance | | D | F | | F |
| | Compression set resistance | | E | A | | B |

| | | | | | | |
|---|---|---|---|---|---|---|
| 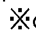 could not be molded | | | | | | |

## Claims

1. A chloroprene-based rubber composition comprising 100 parts by mass of a chloroprene-based rubber, 0.1 to 10 parts by mass of an organic peroxide, and 0.1 to 40 parts by mass of a compound having one or more thioether structures.

2. The chloroprene-based rubber composition of Claim 1, wherein the chloroprene-based rubber comprises a chloroprene polymer containing an unsaturated nitrile monomer unit.

3. The chloroprene-based rubber composition of Claim 1 or 2, wherein the compound having one or more thioether structures has two or more ether structures.

4. The chloroprene-based rubber composition of any one of Claims 1 to 3, wherein the compound having one or more thioether structures has a molecular weight of 300 or more.

5. The chloroprene-based rubber composition of any one of Claims 1 to 4, wherein the unsaturated nitrile monomer is acrylonitrile.

6. The chloroprene-based rubber composition of any one of Claims 1 to 5, wherein the chloroprene-based rubber composition comprises 0.5 to 4 parts by mass of a maleimide compound with respect to 100 parts by mass of the chloroprene-based rubber.

7. The chloroprene-based rubber composition of any one of claims 1 to 6, wherein the chloroprene-based rubber composition comprises 2 to 75 parts by mass of acetylene black with respect to 100 parts by mass of the chloroprene-based rubber.

8. The chloroprene-based rubber composition of any one of Claims 1 to 7, wherein the chloroprene-based rubber composition comprises 1 to 25 parts by mass of zinc powder with respect to 100 parts by mass of the chloroprene-based rubber.

9. A vulcanizate of the chloroprene-based rubber composition of any one of Claims 1 to 8.

10. A vulcanized molded body of the chloroprene-based rubber composition of any one of Claims 1 to 8.
